# EUROPEAN PATENT SPECIFICATION

(11) **EP 1 671 571 B1**
(45) Date of publication and mention of the grant of the patent: **17.09.2008**
(21) Application number: 05255495.3
(22) Date of filing: 08.09.2005
(51) Int. Cl.: A47L 9/16, B04C 5/04, B04C 5/185, B04C 9/00, B04C 3/06

(54) **Cyclone air purifier**
Zyklonartiger Luftreiniger
Purificateur d'air du type cyclonique

(30) Priority: 16.12.2004 KR 2004107402
(43) Date of publication of application: 21.06.2006
(73) Proprietor: Samsung Electronics Co., Ltd., Suwon-si, Gyeonggi-Do (KR)
(72) Inventor: Park, Chan Jung, Suwon-Si, Gyeonggi-Do (KR); Kim, Young Saeng, Incheon-City (KR)
(74) Representative: Waddington, Richard

(56) References cited:
- DE-U1-0202004 020 61
- US-A1- 2003 221 996
- US-A1- 2005 172 584
- US-A1- 2005 172 586
- US-A1- 2005 251 951

## Description

The present general inventive concept relates to an air purifier, and more particularly, to an air purifier using a cyclone apparatus.

A cyclone apparatus is a device used to remove solid or liquid particles from air, and uses a principle (cyclone principle) by which particles contained in the air are separated from the air due to a centrifugal force. Examples of the cyclone apparatus are disclosed in Korean Patent Application Laid-Open No.: 2004-44297, 2003-94872, 2002-78798, etc.

Generally, a conventional air purifier uses a plurality of plate-shaped filters, sucks in the air through a front side, and discharges purified air through a top or side. The conventional air purifier sucks in the air through the front side only and has problems in that an amount of the air flowing into the conventional air purifier is relatively small due to the plurality of plate-shaped filters, and resistance against the flowing air and noise generated from the conventional air purifier becomes greater since the air passes through a structure having the plurality of plate-shaped filters. Moreover, the filters should frequently be cleaned or replaced since dust accumulates in the filters during a longer period of usage of the conventional air purifier. Furthermore, a capacity of air purification is limited in the conventional air purifier since the air passes through the filters attached with the dust.

GB 1156287 discloses a multi-cell dust extractor.

In order to address the foregoing problems, the present invention provides an air purifier using a cyclone principle, as defined in claim 1.

The invention provides a cyclone air purifier to improve a capacity of air purification and to increase an amount of air flowing in an inside of the cyclone air purifier.

The invention provides a cyclone air purifier having a large capacity and a compact structure by disposing a plurality of cyclones effectively within the cyclone air purifier.

The present invention provides a cyclone air purifier to reduce noise and pressure loss occurring due to a resistance against the air flowing in the cyclone air purifier.

The invention provides a cyclone air purifier having a plurality of cyclones formed by combining cyclone bodies and a cover unit in an integrated single body, thereby improving a manufacturing process.

The invention provides a cyclone air purifier to reduce the number of cleaning or replacement processes so that a user uses the cyclone air purifier with convenience.

Additional advantages of the present invention will be set forth in part in the description which follows and, in part, will be obvious from the description, or may be learned by practice of the invention.

According to the present invention there is provided an apparatus as set forth in the appended claims. Preferred features of the invention will be apparent from the dependent claims.

For a better understanding of the invention, and to show how embodiments of the same may be carried into effect, reference will now be made, by way of example, to the accompanying diagrammatic drawings in which:
FIG. 1 is an exploded view illustrating a cyclone air purifier according to an embodiment of the present general inventive concept;
FIG. 2 is a side cross-sectional view of the cyclone air purifier of FIG. 1;
FIG. 3 is a partial view of the cyclone air purifier of FIG. 1;
FIG. 4 is a plan view illustrating a cyclone cover unit of the cyclone air purifier of FIG. 1;
FIG. 5 is a bottom view illustrating a cyclone cover unit of the cyclone air purifier of FIG. 1;
FIG. 6 is a plan view illustrating an upper plate of a first main body unit of the cyclone air purifier of FIG. 1;
FIG. 7 is a cross-sectional view taken along a line VII-VII of FIG. 3 to illustrate a guide unit of the cyclone air purifier of FIG. 3;
FIG. 8 is an enlarged view illustrating a portion of the cyclone cover unit of the cyclone air purifier of FIG. 5; and
FIG. 9 is an enlarged view illustrating a portion of the upper plate of the cyclone air purifier of FIG. 6.

Hereinafter, a cyclone air purifier according to an embodiment of the present general inventive concept will be described in greater detail with reference with the accompanying drawings.

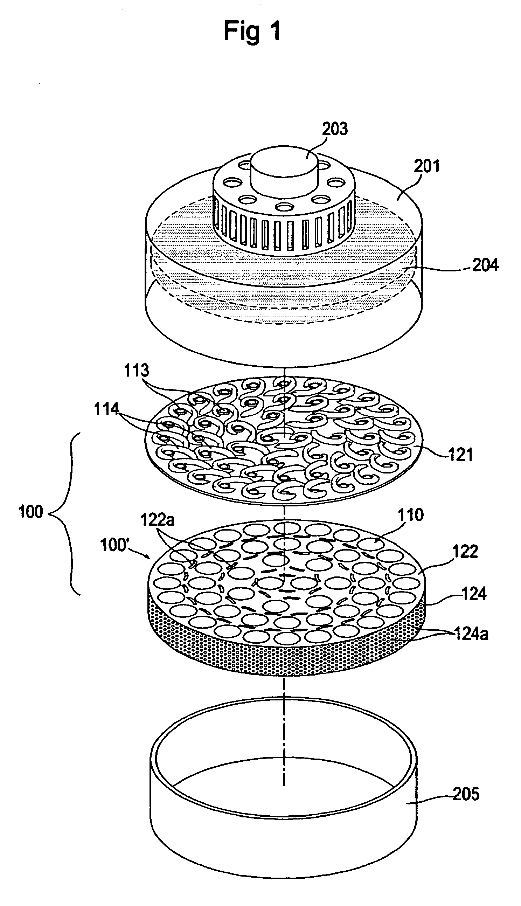

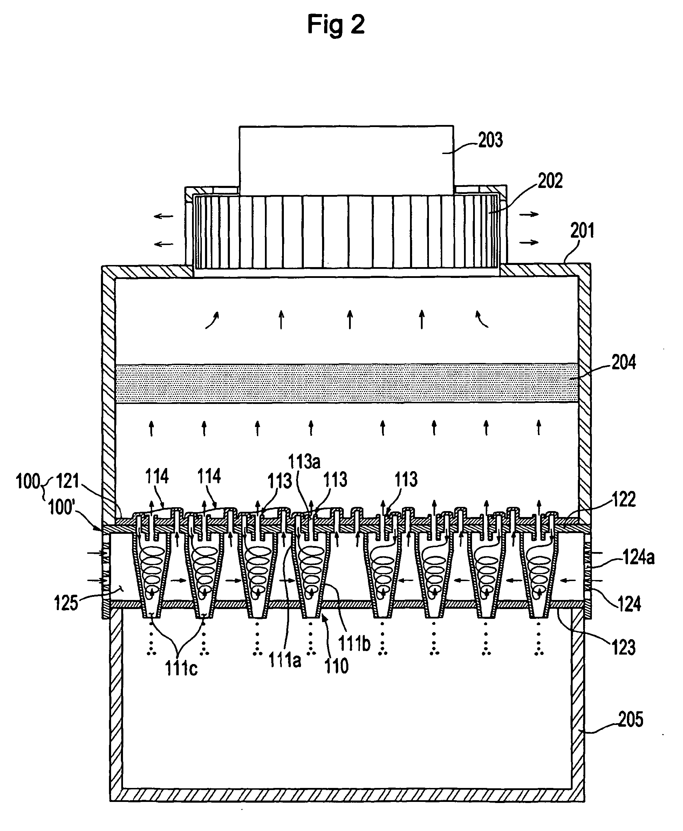

As shown in FIGS. 1 and 2, a cyclone air purifier according to an embodiment of the present general inventive concept includes a main body 100 formed with a plurality of cyclones 110 to purify air using a cyclone principle. A detail structure of the main body 100 will be described later.

The main body 100 includes a discharging guide unit (air outlet) 201 disposed on an upper portion thereof to guide the purified air to be discharged outside the cyclone air purifier. The discharging guide unit 201 is opened downward and connected to the main body 100, and includes a ventilation (discharge) fan 202 installed at an upper inside thereof, and a fan motor 203 installed at an upper side of the ventilation fan 202 to drive the ventilation fan 202. A lower side of the discharging guide unit 201 is fixedly connected to the upper portion of the main body 100.

An air filter 204 may be installed inside the discharging guide unit 201 to filter the air discharged from the main body 100. The air filter 204 filters minute dirt or dust particles which are contained in the air discharged from the main body and have not been removed by the main body 100. The air filter 204 may be detachably attached to the discharging guide unit 201 so that the air filter 204 is selectively used in or removed from the discharge guiding unit 201 if necessary. The air filter 204 can be used together with an optical catalytic filter or a deodorizing filter, or replaced with the optical catalytic filter or the deodorizing filter.

A dust collecting unit 205 of a cylindrical shape having an upper portion opened upward is installed at a lower portion of the main body 100. The dust collecting unit 205 collects various pollutants, such as the dust particles, etc., which are filtered (removed) from the main body 100. The dust collecting unit 205 can be detachably attached to the main body 100 so as to be cleaned up, and a drawer, such as a dust collecting box, to receive the pollutants can be disposed inside the dust collecting unit 205.

Hereinafter, the structure of the main body 100 will be described in detail. The main body 100 includes a first main body 100' in which the plurality of cyclones 110 are disposed parallel to one another, and a cyclone cover unit 121 used as a second main body connected to an upper portion of the first main body 100'. The plurality of cyclones 110 may be disposed on corresponding ones of concentric circles in the first main body 100'. The cyclone cover unit (second main body) 121 includes a plurality of guide units 114 to guide the air discharged from the main body into corresponding insides of the plurality of cyclones 110, and a plurality of second discharging units 113 to discharge the filtered air by the corresponding ones of the plurality of cyclones 110.

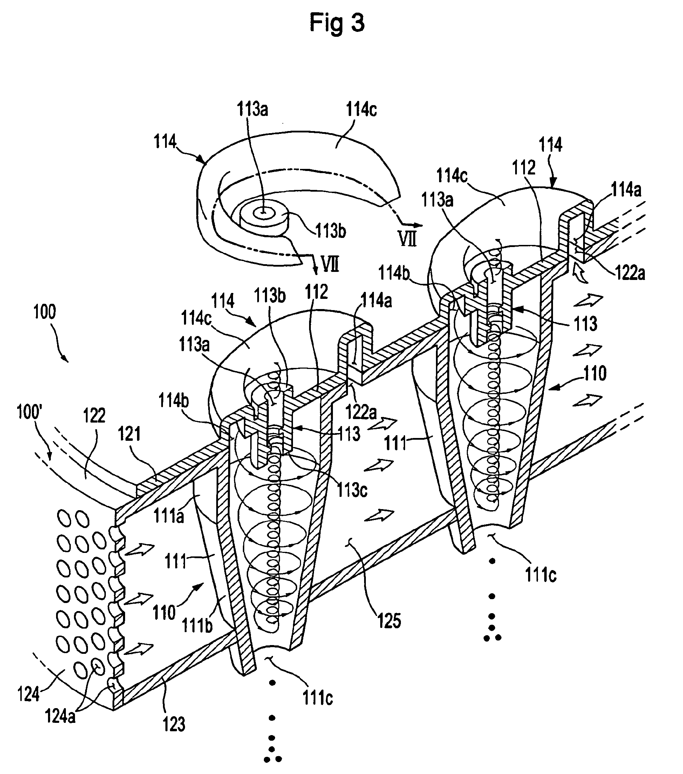

As shown in FIG. 3, the first main body 100' includes an upper plate 122 attached to a lower surface of the cyclone cover unit 121, a lower plate 123 disposed to be spaced-apart from the upper plate 122 to support a lower portion of each of a plurality of cyclone bodies 111, and a side plate 124 disposed around a circumferential side between the upper plate 122 and the lower plate 123.

A plurality of inlet holes (air-suction holes) 124a are formed on the side plate 124 having a cylindrical shape to suck-in the air from an outside of the cyclone air purifier. That is, the plurality of inlet holes 124s are formed on an entire circumferential surface of the side plate 124 to suck in the air in various directions around the cyclone air purifier. Also, the side plate 124 can have a function of pre-filtering and separating large sized-particles from the air.

A space is formed between the upper plate 122 and the lower plate 123 to provide an air path 125 to distribute the sucked-in air to the plurality of cyclones 110. An guide hole 122a is formed on the upper plate 122 so that the air sucked in the air path 125 between the upper plate 122 and the lower plate 123 through the inlet holes 124a of the side plate 124 is guided into each inside of the plurality of cyclones 110 through corresponding ones of the guide units 114 of the cyclone cover unit 121.

Each cyclone 110 formed on the first main body 100' includes the cyclone body 111 having a tube or pipe shape. The tube or pipe-shaped cyclone body 111 of the cyclone 110 includes a circular cylindrical element 111a having a same diameter, and a cone-shaped element 111b extended from a lower portion of the circular cylindrical element 111a to narrow downward. A first discharging unit 111c is formed on a lower portion of the cone-shaped element 111b.

The cyclone cover unit 121 is provided with a cover 112 to cover an upper portion of the circular cylindrical element 111a of the cyclone body 111, and the second discharging unit 113 is formed at a central portion of the cover 112. The second discharging unit 113 includes a discharging element 113a formed on a central axis of the cyclone body 111, an upper protrusion 113b protruding upward, and a lower protrusion 113c protruding downward.

The guide unit 114 is formed to protrude upward from the cyclone cover unit 121 to guide the sucked-in air into the inside of the cyclone 110 from the air path 125, and may be formed in a semi-circular shape with respect to the second discharging unit 113.

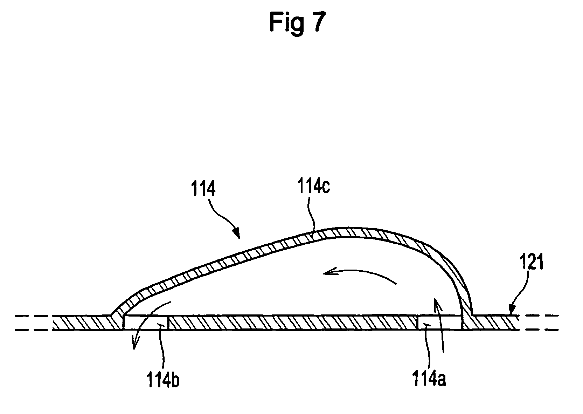

FIG. 7 is a cross-sectional view taken along a line VII-VII of FIG. 3 to illustrate the guide unit 114 of FIG. 3. Referring to FIG. 7, the guide unit 114 includes a first guide groove 114a to communicate with the air path 125, a second guide groove 114b to communicate with the inside of the cyclone 110, and a guide duct 114c connected between the first and second guide grooves 114a and 114b. The guide duct 114c has a height at a portion thereof disposed adjacent to the first guide groove 114a, and the height of the guide duct 113c becomes lowered when approaching the second guide groove 114b. That is, a depth of the first guide groove 114a is deeper that that of the second guide groove 114b. Accordingly, the air sucked in the guide unit 114 flows toward the second guide groove 114b, rotates in a downward direction, and flows in a downward and inclined direction when being sucked in the inside of the cyclone body 111 of the cyclone 110. The first guide groove 114a may be disposed to be spaced-apart from a center of the discharging element 113a by a first distance, and the second guide groove 114b is disposed to be space apart from the center of the discharging element 113a by a second distance. The second distance may be shorter than the first distance.

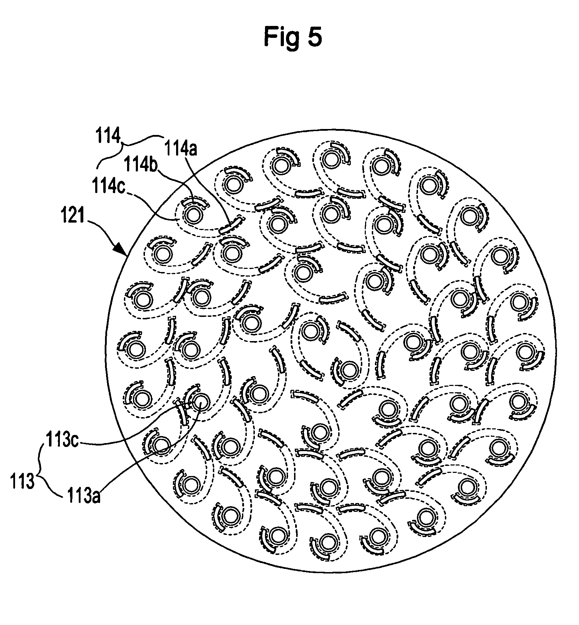

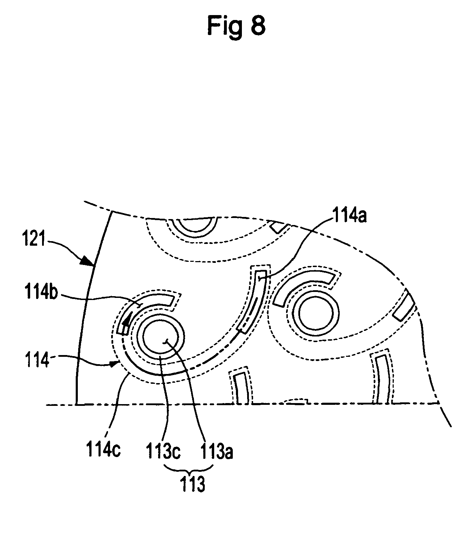

FIG. 8 is an enlarged bottom view of a portion of the cyclone cover unit 121 of the cyclone air purifier of FIG. 5 to illustrate the second discharging unit 113 and the guide unit 114. The first and second guide grooves 114a and 114b are disposed opposite to each other with respect to the central axis of the second discharging unit 113, and the second guide groove 114b is formed to face the inside of the cyclone body 111 of the cyclone 110.

Accordingly, the air is introduced into an inside of the circular cylindrical element 111a of the cyclone body 111, rotates in a spiral direction along an inside surface of the circular cylindrical element 111a to gradually descend, and flows into the cone-shaped element 111b. The air continues to rotate in the spiral direction within the cone-shaped element 111b so that heavy dust particles or pollutants are centrifugal-separated to be discharged downward through the first discharging unit 111c and collected into the dust collecting unit 205. The purified air ascends through a central inside portion of the cyclone 110 to be discharged into the inside of the discharge guide unit 201 through the second discharging unit 113.

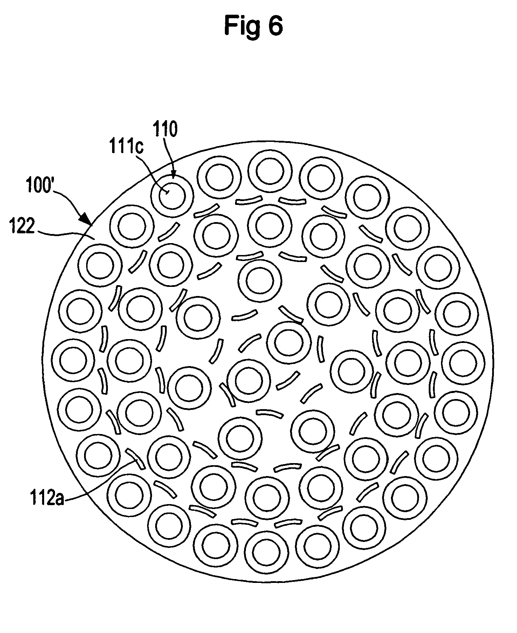

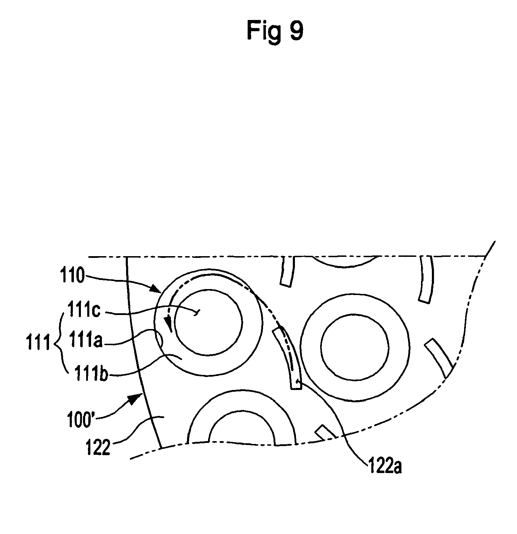

FIG. 9 is an enlarged view illustrating a portion of the upper plate 122 of the first main body 100' of the air purifier of FIG. 6. As shown FIG. 9, the guide hole 122a is formed to correspond to the first guide groove 114a of the guide unit 114 so that the guide unit 114 communicates with the air path 125 through the first guide groove 114b and the guide hole 122a of the upper plate 122. Here, arrows shown in FIGS. 7 through 9 indicate directions in which the air flows.

The upper plate 122 of the first main body 100' and the plurality of cyclone bodies 111 may be formed in a monolithic body. That is, the plurality of cyclone bodies 111 are formed on the upper plate 122 having a circular-shaped plate in a single body. The plurality of cyclones 110 are arranged on corresponding ones of a plurality of concentric circles as shown in FIG. 6.

That is, two cyclones 110 are disposed in a central area of the first main body 100', seven cyclones 110 are disposed along one of the concentric circles outside the central area, and a number of cyclones 110 greater than seven are disposed to form corresponding ones of the concentric circles. Accordingly, a greater number of cyclones 110 can effectively be arranged within the main body 100.

In addition, the guide holes 122a formed on the upper plate 122 are disposed (arranged) close to corresponding ones of the cyclones 110. Since the guide holes 122 are disposed to correspond to the respective cyclones 110, the guide holes 122 form the same concentric circles as the cyclones 110.

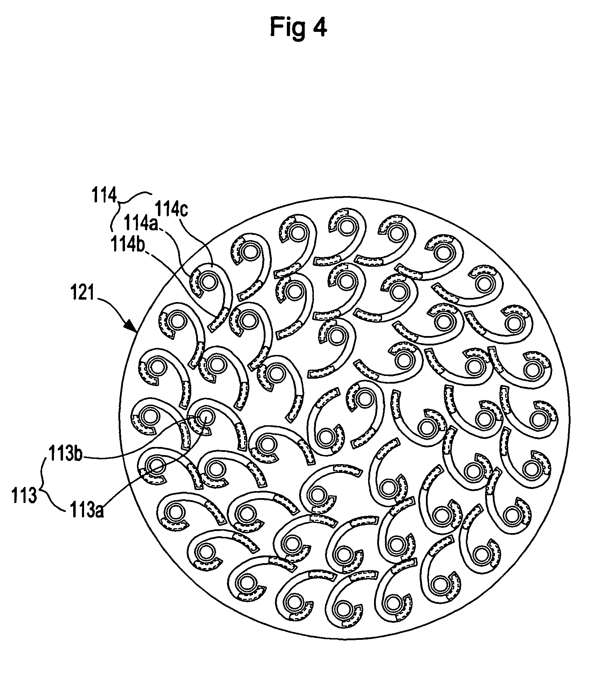

The guide units 114 of the cyclone cover unit 121 and the second discharge units 113 may be formed in an integrated body. That is, the guide units 114 and the second discharge units 113 are arranged to form the concentric circles to correspond to the respective cyclones 110 as shown in FIGS. 4 and 5.

As described above, since the plurality of cyclones 110 are arranged along the corresponding ones of the concentric circles, the plurality of cyclones 110 can be formed in even a compact structure. Moreover, since the plurality of cyclones 110 are formed when the integrated body of the upper plate 122 of the first main body 110' is combined with the integrated body of the cyclone cover unit 121, manufacturing costs are reduced compared to separate manufacturing processes of the cyclones 110, the guide units 114, and the second discharging units 113.

An air flow within the main body 100 will be described hereinafter.

The contaminated air containing dust particles is introduced into the inside of the main body 100 through the inlet holes 124a of the side plate 124. The introduced air flows along the air path 125 and is distributed and introduced into the respective cyclones 110.

In more detail, the air introduced into the air path 125 through the inlet holes 124a of the side plate 124 is distributed by passing through the guide holes 122a formed on the upper plate 122 of the first main body 110', and guided into the inside of each of the cyclones 110. That is, the air introduced into the first guide groove 114a of the guide unit 114 flows along the guide duct 114c having a spiral shape to start to form a spiral air current.

The air inside the guide unit 114 is introduced into the inside of the cyclone body 111 through the second guide groove 114b. The air introduced into the inside of the cyclone body 111 flows along the inside surfaces of the cylindrical element 111a and the cone-shaped element 111b of the cyclone body 111 to form a spiral dive air current.

When the spiral dive air current continues to descend, the dust particles contained in the air rotates along the spiral dive air current, is separated from the air by a centrifugal force and gravity, and is discharged through the first discharging unit 111c. The purified air from which the dust particles are separated forms an air ascending current in the central portion of the cyclone body 111 and to be discharged outside the main body 100 through the second discharging unit 113.

An operation of the cyclone air purifier will be explained hereinafter according to another embodiment of the present general inventive concept.

When the cyclone air purifier starts to operate, the fan motor 203 drives the ventilation fan 202 to rotate. The air surrounding the cyclone air purifier is sucked into the inside of the main body 100 by a sucking force of the ventilation fan 202. In the main body 100, the air sucked into the main body 100 is purified so that the separated dust particles are discharged into the dust collecting unit 205, and the purified air is discharged into the discharging guide unit 201. The purified air of the discharging guide unit 201 passes through the air filter 204 to remove the minute dirt or dust particles remaining in the purified air or to be discharged outside the cyclone air purifier after sterilization or deodorization.

As described above, the cyclone air purifier according to the embodiment of the present general inventive concept separates the dirt and dust particles from the sucked-in air using a cyclone principle to effectively purify the sucked-in air compared to a conventional filter-type air purifier. Since the sucked-in air does not have to pass through a plurality of filters, resistance against an air flow and noise from an air current are reduced significantly.

In addition, the air does not have to pass through the removed dirt and dust particles since the removed dirt and dust particles are collected in the dust collecting unit which is separately installed from a passage of the air, thereby improving an air purifying function.

Since the air is sucked into the cyclone air purifier through the inlet holes formed on an entire surface of the side plate, the air disposed around the cyclone air purifier in almost all directions can be purified.

According to an embodiment of the present general inventive concept, in the cyclone air purifier, the plurality of cyclones are arranged parallel to one another and disposed on corresponding ones of the concentric circles, thereby realizing a compact structure having a large air purifying ability.

According to an embodiment of the present general inventive concept, in the cyclone air purifier, a plurality of cyclone main body are integrated in a single body, and a plurality of guide units and a plurality of discharging units are formed on a single cyclone cover unit in an integrated body, thereby simplifying a manufacturing process.

According to an embodiment of the present general inventive concept, in the cyclone air purifier, since the dirt and dust particles are removed in the cyclone body, additional operation of cleaning or replacing a filter which is additionally installed can be reduced.

## Claims

1. A cyclone air purifier comprising:
a main body (100) having an air path (125) and a plurality of cyclones (110) disposed parallel to one another therein to communicate with the air path (125),
wherein the main body (100) comprises a side plate (124) having a plurality of inlet holes (124a) formed thereon to introduce an outside air containing particles into the air path (125) of the main body (100), and each of the plurality of cyclones (110) comprises a first discharging unit (111c) formed at a lower portion thereof to guide discharge of the particles which are separated from the air, and a second discharging unit (113) formed on an upper portion thereof to discharge the air.

2. The cyclone air purifier of claim 1, further comprising:
a plurality of guide units (114) to guide the air of the air path (125) into an inside of each of the plurality of cyclones (110).

3. The cyclone air purifier of claim 2, wherein each of the guide units (114) is formed around the second discharging unit (113) of each of the plurality of cyclones (110).

4. The cyclone air purifier of claim 2 or claim 3, wherein each of the guide units (114) comprises:
a first guide groove (114a) disposed on an outside of a corresponding one of the plurality of cyclones (110) to communicate with the air path (125);
a guide duct (114c) to guide the air introduced into the first guide groove (114a) toward the corresponding one of the plurality of cyclones (110); and
a second guide groove (114b) extended from the guide duct (114c) to communicate with an inside of the corresponding one of the plurality of cyclones (110).

5. The cyclone air purifier of claim 4, wherein the first guide groove (114a) has a first depth deeper than a second depth of the second guide groove (114b).

6. The cyclone air purifier of claim 4 or claim 5, wherein the second guide groove (114b) is formed to face an inside surface of the corresponding one of the plurality of cyclones (110).

7. The cyclone air purifier of any one of claims 4 to 6, wherein the first and second guide grooves (114a,114b) are disposed opposite to each other with respect to the second discharging unit (113).

8. The cyclone air purifier of any preceding claim, wherein the second discharging unit (113) comprises a lower protrusion to protrude downward toward an inside of the corresponding one of the plurality of cyclones (110).

9. The cyclone air purifier of any preceding claim, further comprising:
a collector (205) disposed on a lower portion of the main body (100) to collect the separated particles discharged through the first discharging unit (111c) of the corresponding one of the plurality of cyclones (110).

10. The cyclone air purifier of any preceding claim, further comprising:
a discharging guide unit (201) disposed on an upper portion of the main body (100) to receive the purified air from the plurality of cyclones (110) and to discharge the received purified air.

11. The cyclone air purifier of claim 10, wherein the discharging guide unit (201) comprises:
a ventilation fan (202) installed therein.

12. The cyclone air purifier of claim 10 or claim 11, wherein the discharging guide unit (201) comprises:
a filter (204) installed therein.

13. The cyclone air purifier of any preceding claim, wherein the inlet holes (124a) are dispersed and arranged on the side plate (124) so that the outside air around the main body (100) is sucked-in through the inlet holes (124a).

14. The cyclone air purifier of any preceding claim, wherein the inlet holes (124a) are dispersed and arranged along an entire circumference of the side plate (124) so that the outside air is sucked-in throughout the entire circumference.

15. The cyclone air purifier of any preceding claim, wherein the plurality of cyclones (110) are disposed on corresponding ones of concentric circles.

16. The cyclone air purifier of any preceding claim, wherein
the main body is a first main body (100') having an upper plate, a lower plate to form an air path (125) with the upper plate, the side plate (124) formed with a plurality of inlet holes (124a) through which an outside air is introduced into the air path (125), and has a cylindrical shape;
the plurality of cyclone bodies (110) disposed parallel to one another in the first main body (100') to communicate with the air path (125), have an upper portion disposed in an opening of the upper plate, and a lower portion to pass through the lower plate to form a first discharging unit (111c); and further comprising
a second main body (121) having cover portions to cover corresponding ones of the openings of the upper plates, and having second discharging units (113) formed on the respective cover portions to guide discharge of purified air from a corresponding one of the plurality of cyclones (110).

17. The cyclone air purifier of claim 16, wherein the first main body (100') comprises a guide hole formed on the upper plate outside the corresponding one of the plurality of cyclone bodies (110), and the second main body (121) comprises a plurality of guide units (114) to guide the air, introduced from the air path (125) through the guide hole, into an inside of the corresponding one of the plurality of cyclone bodies (110).

18. The cyclone air purifier of claim 17, wherein each of the guide units (114) is formed around a corresponding one of the second discharging units (113).

19. The cyclone air purifier of any one of claims 16 to 18, wherein the upper plate of the first main body (100') and the plurality of cyclone bodies (110) are formed in an integrated single body.

20. The cyclone air purifier of any one of claims 16 to 19, wherein the second main body (121) comprises a plate shape formed by combining the cover portions and the second discharging units (113) in an integrated single body.

21. The air purifier of any preceding claim, further comprising:
an inlet; and wherein
the main body (100) has first and second plate units to form an air path (125) therebetween to receive air and particles through the inlet, and the plurality of cyclones (110) each have a cyclone body, a guide hole is formed on the second plate unit through which the air and particles are introduced from the air path (125) into an inside of the cyclone body, the first discharging unit (111c) is formed on a first end of the cyclone body to discharge the particles from the inside of the cyclone body to a first outside of the main body (100) through the first plate unit, and the second discharging unit (113) is formed on a second end of the cyclone body to discharge the air from the inside of the cyclone body to a second outside of the main body (100) through the second plate unit;
a collecting unit is disposed to receive the particles which have been discharged from the inside of the cyclone body to the first outside of the main body (100) through the first discharging unit (111c) ; and
a discharging guide unit (201) is disposed to receive the air which has been discharged from the inside of the cyclone body to the second outside of the main body (100) through the second discharging unit (113).

22. The air purifier of claim 21, wherein the plurality of cyclones (110) have central axes parallel to each other, and centers of the first and second discharge units of each cyclone are disposed parallel to a corresponding one of the central axes.

23. The air purifier of claim 21 or claim 22, wherein the first end of the cyclone body protrudes from the first plate unit toward the collecting unit to form the first discharging unit (111c).

24. The air purifier of any one of claims 21 to 23, wherein the second end of the cyclone body protrudes from the second plate unit toward the discharge guide unit to form the second discharging unit (113).

25. The air purifier of any one of claims 21 to 24, further comprising:
a fan motor unit to discharge the air contained in the discharge guide unit outside the air purifier.

26. The air purifier of claim 25, wherein the plurality of cyclones (110) are disposed in a first direction, and the first and second plate units, the main body (100), the collecting unit, the discharge guide unit, and the fan motor unit are disposed in a second direction.

27. The air purifier of claim 25, wherein the first and second plate units are disposed in the first direction to form the air path (125).

28. The air purifier of any one of claims 21 to 27, wherein the each cyclone further comprises a guide unit having a first guide groove (114a) to receive the air and particles through the guide hole, a second guide groove (114b), and a guide duct (114c) formed between the first and second guide grooves (114a,114b), so that the air and the particles are introduced from the air path (125) into the inside of the cyclone body through the guide hole, the first guide groove (114a), the guide duct (114c), and the second guide groove (114b) in order.

29. The air purifier of claim 28, wherein the first guide groove (114a) is spaced apart from a central axis of the cyclone body by a first distance, and the second guide groove (114b) is spaced apart from the central axis of the cyclone body by a second distance longer than the first distance.

30. The air purifier of claim 28 or claim 29, wherein the first guide groove (114a), the second guide groove (114b), and the guide duct (114c) are disposed on an eccentric line of a central axis of the cyclone body.

31. The air purifier of any one of claims 21 to 30, wherein each cyclone further comprises a guide unit disposed around the second discharging unit (113) to introduce the air and particles into the inside of the cyclone body through the guide hole.

32. The air purifier of any one of claims 21 to 31, wherein the main body (100) further comprises a side plate (124) formed with the inlet having inlet holes (124a).

33. The air purifier of any one of claims 21 to 32, wherein the air purifier comprises a cylindrical shape having a side, a bottom, a top, and a middle, and the side plate (124), the collecting unit, the discharging guide unit (201), and the main body (100) correspond to portions of the side, bottom, top, and middle, respectively.

34. The air purifier of any one of claims 21 to 33, wherein center lines of the plurality of cyclones (110) are perpendicular to the at least one of the first and second plate units.

35. The air purifier of any one of claims 21 to 34, wherein the plurality of cyclones (110) are disposed in a circumferential direction of the main body (100).

## Patentansprüche

1. Zyklon-Luftreiniger, umfassend:
einen Hauptkörper (100) mit einem Luftweg (125) und einer Vielzahl von Zyklonen (110), die parallel zueinander darin angeordnet sind, um mit dem Luftweg (125) in Verbindung zu stehen; und
wobei der Hauptkörper (100) eine Seitenplatte (124) umfasst, die eine Vielzahl von Einlasslöchern (124a) aufweist, die daran ausgebildet sind, um eine Außenluft, die Teilchen enthält, in den Luftweg (125) des Hauptkörpers (100) einzuleiten, und jeder der Vielzahl von Zyklonen (110) eine erste Ablasseinheit (111 c), die in einem unteren Abschnitt davon ausgebildet ist, um das Ablassen der Teilchen, die von der Luft getrennt sind, zu leiten, und eine zweite Ablasseinheit (113) umfasst, die an einem oberen Abschnitt davon ausgebildet ist, um die Luft abzulassen.

2. Zyklon-Luftreiniger nach Anspruch 1, des Weiteren umfassend:
eine Vielzahl von Leiteinheiten (114), um die Luft des Luftwegs (125) in ein inneres von jedem der Vielzahl von Zyklonen (110) hineinzuleiten.

3. Zyklon-Luftreiniger nach Anspruch 2, wobei jede der Leiteinheiten (114) um die zweite Ablasseinheit (113) von jedem der Vielzahl von Zyklonen (110) herum ausgebildet ist.

4. Zyklon-Luftreiniger nach Anspruch 2 oder Anspruch 3, wobei jede der Leiteinheiten (114) umfasst:
eine erste Leitnut (114a), die an einer Außenseite eines entsprechenden der von Zyklonen (110) angeordnet ist, um mit dem Luftweg (125) in Verbindung zu stehen;
einen Leitkanal (114c), um die Luft, die in die erste Leitnut (114a) eingeleitet wird, zu dem entsprechenden der Vielzahl von Zyklonen (110) hin zu leiten; und
eine zweite Leitnut (114b), die sich von dem Leitkanal (114c) erstreckt, um mit einem Inneren des entsprechenden der Vielzahl von Zyklonen (110) in Verbindung zu stehen.

5. Zyklon-Luftreiniger nach Anspruch 4, wobei die erste Leitnut (114a) eine erste Tiefe aufweist, die tiefer ist als eine zweite Tiefe der zweiten Leitnut (114b).

6. Zyklon-Luftreiniger nach Anspruch 4 oder Anspruch 5, wobei die zweite Leitnut (114b) derart ausgebildet ist, dass sie auf eine Innenfläche des entsprechenden der Vielzahl von Zyklonen (110) zeigt.

7. Zyklon-Luftreiniger nach einem der Ansprüche 4 bis 6, wobei die erste und zweite Leitnut (114a, 114b) in Bezug auf die zweite Ablasseinheit (113) einander gegenüberliegend angeordnet sind.

8. Zyklon-Luftreiniger nach einem vorhergehenden Anspruch, wobei die zweite Ablasseinheit (113) einen unteren Vorsprung umfasst, der nach unten zu einem Inneren des entsprechenden der Vielzahl von Zyklonen (110) vorsteht.

9. Zyklon-Luftreiniger nach einem vorhergehenden Anspruch, des Weiteren umfassend:
eine Sammeleinrichtung (205), die an einem unteren Abschnitt des Hauptkörpers (100) angeordnet ist, um die getrennten Teilchen zu sammeln, die über die erste Ablasseinheit (111c) des entsprechenden der Vielzahl von Zyklonen (110) abgelassen werden.

10. Zyklon-Luftreiniger nach einem vorhergehenden Anspruch, des Weiteren umfassend:
eine Ablassleiteinheit (201), die an einem oberen Abschnitt des Hauptkörpers (100) angeordnet ist, um die gereinigte Luft von der Vielzahl von Zyklonen (110) zu empfangen und um die empfangene gereinigte Luft abzulassen.

11. Zyklon-Luftreiniger nach Anspruch 10, wobei die Ablassleiteinheit (201) umfasst:
ein Lüftungsgebläse (202), das darin installiert ist.

12. Zyklon-Luftreiniger nach Anspruch 10 oder Anspruch 11, wobei die Ablassleiteinheit (201) umfasst:
ein Filter (204), das darin installiert ist.

13. Zyklon-Luftreiniger nach einem vorhergehenden Anspruch, wobei die Einlasslöcher (124a) derart verstreut und auf der Seitenplatte (124) angeordnet sind, dass die Außenluft um den Hauptkörper (100) herum durch die Einlasslöcher (124a) eingesaugt wird.

14. Zyklon-Luftreiniger nach einem vorhergehenden Anspruch, wobei die Einlasslöcher (124a) derart verstreut und entlang eines gesamten Umfangs der Seitenplatte (124) angeordnet sind, dass die Außenluft über den gesamten Umfang eingesaugt wird.

15. Zyklon-Luftreiniger nach einem vorhergehenden Anspruch, wobei die Vielzahl von Zyklonen (110) an entsprechenden von konzentrischen Kreisen angeordnet ist.

16. Zyklon-Luftreiniger nach einem vorhergehenden Anspruch, wobei
der Hauptkörper ein erster Hauptkörper (100`) ist, der eine obere Platte, eine untere Platte zum Ausbilden eines Luftwegs (125) mit der oberen Platte, die Seitenplatte (124), die mit einer Vielzahl von Einlasslöchern (124a) ausgebildet ist, durch die eine Außenluft in den Luftweg (125) eingeleitet wird, aufweist und eine zylindrische Form aufweist;
wobei die Vielzahl von Zyklonkörpern (110), die parallel zueinander in dem ersten Hauptkörper (100') angeordnet sind, um mit dem Luftweg (125) in Verbindung zu stehen, einen oberen Abschnitt, der in einer Öffnung der oberen Platte angeordnet ist, und einen unteren Abschnitt aufweisen, der die untere Platte durchläuft, um eine erste Ablasseinheit (111c) auszubilden; und des Weiteren umfassend
einen zweiten Hauptkörper (121) mit Abdeckabschnitten zum Abdecken von entsprechenden der Öffnungen der oberen Platten und mit zweiten Ablasseinheiten (113), die an den jeweiligen Abdeckabschnitten ausgebildet sind, um das Ablassen gereinigter Luft aus einem entsprechenden der Vielzahl von Zyklonen (110) zu leiten.

17. Zyklon-Luftreiniger nach Anspruch 16, wobei der erste Hauptkörper (100') ein Leitloch umfasst, das an der oberen Platte außerhalb des entsprechenden der Vielzahl von Zyklonkörpern (110) ausgebildet ist, und der zweite Hauptkörper (121) eine Vielzahl von Leiteinheiten (114) umfasst, um die Luft, die aus dem Luftweg (125) durch das Leitloch eingeleitet wird, in ein Inneres des entsprechenden der Vielzahl von Zyklonkörpern (110) hineinzuleiten.

18. Zyklon-Luftreiniger nach Anspruch 17, wobei jede der Leiteinheiten (114) um eine entsprechende der zweiten Ablasseinheiten (113) herum ausgebildet ist.

19. Zyklon-Luftreiniger nach einem der Ansprüche 16 bis 18, wobei die obere Platte des ersten Hauptkörpers (100') und die Vielzahl von Zyklonkörpern (110) in einem integrierten Einzelkörper ausgebildet sind.

20. Zyklon-Luftreiniger nach einem der Ansprüche 16 bis 19, wobei der zweite Hauptkörper (121) eine Plattenform umfasst, die durch Kombinierten der Abdeckabschnitte und der zweiten Ablasseinheiten (113) in einem integrierten Einzelkörper ausgebildet ist.

21. Luftreiniger nach einem vorhergehenden Anspruch, des Weiteren umfassend:
einen Einlass; und wobei
der Hauptkörper (100) eine erste und zweite Platteneinheit aufweist, um einen Luftweg (125) dazwischen auszubilden, um Luft und Teilchen durch den Einlass zu empfangen, und die Vielzahl von Zyklonen (110) jeweils einen Zyklonkörper aufweisen, wobei ein Leitloch an der zweiten Platteneinheit ausgebildet ist, durch das die Luft und Teilchen aus dem Luftweg (125) in ein Inneres des Zyklonkörpers eingeleitet werden, wobei die erste Ablasseinheit (111c) an einem ersten Ende des Zyklonkörpers ausgebildet ist, um die Teilchen aus dem Inneren des Zyklonkörpers durch die erste Platteneinheit zu einer ersten Außenseite des Hauptkörpers (100) abzulassen, und die zweite Ablasseinheit (113) an einem zweiten Ende des Zyklonkörpers ausgebildet ist, um die Luft aus dem Inneren des Zyklonkörpers durch die zweite Platteneinheit zu einer zweiten Außenseite des Hauptkörpers (100) abzulassen;
eine Sammeleinheit angeordnet ist, um die Teilchen zu empfangen, die aus dem Inneren des Zyklonkörpers durch die erste Ablasseinheit (111c) zu der ersten Außenseite des Hauptkörpers (100) abgelassen werden; und
eine Ablassleiteinheit (201) angeordnet ist, um die Luft zu empfangen, die aus dem Inneren des Zyklonkörpers durch die zweite Ablasseinheit (113) zu der zweiten Außenseite des Hauptkörpers (100) abgelassen wird.

22. Luftreiniger nach Anspruch 21, wobei die Vielzahl von Zyklonen (110) mittige Achsen aufweisen, die parallel zueinander sind, und Mitten der ersten und zweiten Ablasseinheit jedes Zyklons parallel zu einer entsprechenden der mittigen Achsen angeordnet sind.

23. Luftreiniger nach Anspruch 21 oder Anspruch 22, wobei das erste Ende des Zyklonkörpers von der ersten Platteneinheit zu der Sammeleinheit hin vorsteht, um die erste Ablasseinheit (111c) auszubilden.

24. Luftreiniger nach einem der Ansprüche 21 bis 23, wobei das zweite Ende des Zyklonkörpers von der zweiten Platteneinheit zu der Ablassleiteinheit hin vorsteht, um die zweite Ablasseinheit (113) auszubilden.

25. Luftreiniger nach einem der Ansprüche 21 bis 24, des Weiteren umfassend:
eine Gebläsemotoreinheit, um die Luft, die in der Ablassleiteinheit enthalten ist, außerhalb des Luftreinigers abzulassen.

26. Luftreiniger nach Anspruch 25, wobei die Vielzahl von Zyklonen (110) in einer ersten Richtung angeordnet ist und die erste und zweite Platteneinheit, der Hauptkörper (100), die Sammeleinheit, die Ablassleiteinheit und die Gebläsemotoreinheit in einer zweiten Richtung angeordnet sind.

27. Luftreiniger nach Anspruch 25, wobei die erste und zweite Platteneinheit in der ersten Richtung angeordnet sind, um den Luftweg (125) auszubilden.

28. Luftreiniger nach einem der Ansprüche 21 bis 27, wobei jeder Zyklon des Weiteren eine Leiteinheit umfasst, die eine erste Leitnut (114a) zum Empfangen der Luft und Teilchen durch das Leitloch, eine zweite Leitnut (114b) und einen Leitkanal (114c), der zwischen der ersten und zweiten Leitnut (114a, 114b) ausgebildet ist, aufweist, so dass die Luft und die Teilchen aus dem Luftweg (125) durch das Leitloch in das Innere des Zyklonkörpers, die erste Leitnut (114a), den Leitkanal (114c) und die zweite Leitnut (114b) in der Reihenfolge eingeleitet werden.

29. Luftreiniger nach Anspruch 28, wobei die erste Leitnut (114a) mit einem ersten Abstand von einer mittigen Achse des Zyklonkörpers beabstandet ist und die zweite Leitnut (114b) mit einem zweiten Abstand, der länger ist als der erste Abstand, von der mittigen Achse des Zyklonkörpers beabstandet ist.

30. Luftreiniger nach Anspruch 28 oder Anspruch 29, wobei die erste Leitnut (114a), die zweite Leitnut (114b) und der Leitkanal (114c) auf einer exzentrischen Linie einer mittigen Achse des Zyklonkörpers angeordnet sind.

31. Luftreiniger nach einem der Ansprüche 21 bis 30, wobei jeder Zyklon des Weiteren eine Leiteinheit die um die zweite Ablasseinheit (113) herum angeordnet ist, um die Luft und Teilchen durch das Leitloch in das Innere des Zyklonkörpers einzuleiten.

32. Luftreiniger nach einem der Ansprüche 21 bis 31, wobei der Hauptkörper (100), des Weiteren eine Seitenplatte (124) umfasst, die mit dem Einlass mit Einlasslöchern (124a) ausgebildet ist.

33. Luftreiniger nach einem der Ansprüche 21 bis 32, wobei der Luftreiniger eine zylindrische Form mit einer Seite, einem unteren Teil, einem oberen Teil und einer Mitte umfasst und die Seitenplatte (124), die Sammeleinheit, die Ablassleiteinheit (201) und der Hauptkörper (100) Abschnitten der Seite, des unteren Teils, des oberen Teils bzw. der Mitte entsprechen.

34. Luftreiniger nach einem der Ansprüche 21 bis 33, wobei mittige Linien der Vielzahl von Zyklonen (110) zu der wenigstens einen der ersten und zweiten Platteneinheit senkrecht sind.

35. Luftreiniger nach einem der Ansprüche 21 bis 34, wobei die Vielzahl von Zyklonen (110) in einer Umtangsrichtung des Hauptkörpers (100) angeordnet ist.

## Revendications

1. Purificateur d'air à cyclones, comprenant:
un corps principal (100) ayant un trajet d'air (125) et une pluralité de cyclones (110) disposés parallèlement l'un à l'autre dans celui-ci pour communiquer avec le trajet d'air (125),
dans lequel le corps principal (100) comprend une plaque latérale (124) sur laquelle est formée une pluralité d'orifices d'entrée (124a) pour introduire de l'air extérieur contenant des particules dans le trajet d'air (125) du corps principal (100), et chacun de la pluralité de cyclones (110) comprend une première unité de décharge (111c) formée dans sa partie inférieure pour guider la décharge des particules qui sont séparées de l'air et une seconde unité de décharge (113) formée dans sa partie supérieure pour décharger l'air.

2. Purificateur d'air à cyclones selon la revendication 1, comprenant en outre :
une pluralité d'unités de guidage (114) pour guider l'air du trajet d'air (125) à l'intérieur de chacun de la pluralité de cyclones (110).

3. Purificateur d'air à cyclones selon la revendication 2, dans lequel chacune des unités de guidage (114) est formée autour de la seconde unité de décharge (113) de chacun de la pluralité de cyclones (110).

4. Purificateur d'air à cyclones selon la revendication 2 ou la revendication 3, dans lequel chacune des unités de guidage (114) comprend :
une première rainure de guidage (114a) disposée à l'extérieur d'un cyclone correspondant de la pluralité de cyclones (110) pour communiquer avec le trajet d'air (125) ;
un conduit de guidage (114c) pour guider l'air introduit dans la première rainure de guidage (114a) vers le cyclone correspondant de la pluralité de cyclones (110) ; et
une seconde rainure de guidage (114b) prolongée à partir du conduit de guidage (114c) pour communiquer avec l'intérieur du cyclone correspondant de la pluralité de cyclones (110).

5. Purificateur d'air à cyclones selon la revendication 4, dans lequel la première rainure de guidage (114a) a une première profondeur plus grande qu'une seconde profondeur de la seconde rainure de guidage (114b).

6. Purificateur d'air à cyclones selon la revendication 4 ou la revendication 5, dans lequel la seconde rainure de guidage (114b) est formée pour faire face à une surface intérieure du cyclone correspondant de la pluralité de cyclones (110).

7. Purificateur d'air à cyclones selon l'une quelconque des revendications 4 à 6, dans lequel la première et la seconde rainures de guidage (114a, 114b) sont disposées opposées l'une à l'autre par rapport à la seconde unité de décharge (113).

8. Purificateur d'air à cyclones selon l'une quelconque des revendications précédentes, dans lequel la seconde unité de décharge (113) comprend une saillie inférieure dépassant vers le bas vers l'intérieur du cyclone correspondant de la pluralité de cyclones (110).

9. Purificateur d'air à cyclones selon l'une quelconque des revendications précédentes, comprenant en outre :
un collecteur (205) disposé sur une partie inférieure du corps principal (100) pour recueillir les particules séparées déchargées à travers la première unité de décharge (111c) du cyclone correspondant de la pluralité de cyclones (110).

10. Purificateur d'air à cyclones selon l'une quelconque des revendications précédentes, comprenant en outre :
une unité de guidage de décharge (201) disposée sur une partie supérieure du corps principal (100) pour recevoir l'air purifié de la pluralité de cyclones (110) et décharger l'air purifié reçu.

11. Purificateur d'air à cyclones selon la revendication 10, dans lequel l'unité de guidage de décharge (201) comprend :
un ventilateur (202) installé dans celle-ci.

12. Purificateur d'air à cyclones selon la revendication 10 ou la revendication 11, dans lequel l'unité de guidage de décharge (201) comprend :
un filtre (204) installée dans celle-ci.

13. Purificateur d'air à cyclones selon l'une quelconque des revendications précédentes, dans lequel les orifices d'entrée (124a) sont dispersés et aménagées sur la plaque latérale (124) de sorte que l'air extérieur autour du corps principal (100) y soit aspiré à travers les orifices d'entrée (124a).

14. Purificateur d'air à cyclones selon l'une quelconque des revendications précédentes, dans lequel les orifices d'entrée (124a) sont dispersés et aménagés le long de toute la circonférence de la plaque latérale (124) de sorte que l'air extérieur y soit aspiré dans l'ensemble de la circonférence.

15. Purificateur d'air à cyclones selon l'une quelconque des revendications précédentes, dans lequel la pluralité de cyclones (110) est disposée sur des cercles correspondants de cercles concentriques.

16. Purificateur d'air à cyclones selon l'une quelconque des revendications précédentes, dans lequel :
le corps principal est un premier corps principal (100') ayant une plaque supérieure, une plaque inférieure pour former un trajet d'air (125) avec la plaque supérieure, la plaque latérale (124) étant formée d'une pluralité d'orifices d'entrée (124a) à travers lesquels de l'air extérieur est introduit dans le trajet d'air (125) et a une forme cylindrique ;
la pluralité de corps de cyclones (110) disposés parallèlement l'un à l'autre dans le premier corps principal (100') pour communiquer avec le trajet d'air (125) ont une partie supérieure disposée dans une ouverture de la plaque supérieure et une partie inférieure pour passer à travers la plaque inférieure afin de former une première unité de décharge (111c) ; et comprenant en outre :
un second corps principal (121) ayant des parties de couverture pour des ouvertures correspondantes des ouvertures des plaques supérieures et ayant des secondes unités de décharge (113) formées sur les parties de couverture respectives pour guider la décharge d'air purifié provenant d'un cyclone correspondant de la pluralité de cyclones (110).

17. Purificateur d'air à cyclones selon la revendication 16, dans lequel le premier corps principal (100') comprend un orifice de guidage formé sur la plaque supérieure à l'extérieur du corps de cyclone correspondant de la pluralité de corps de cyclones (110) et le second corps principal (121) comprend une pluralité d'unités de guidage (114) pour guider l'air, introduit depuis le trajet d'air (125) à travers l'orifice de guidage, à l'intérieur du corps de cyclone correspondant de la pluralité de corps de cyclones (110).

18. Purificateur d'air à cyclones selon la revendication 17, dans lequel chacune des unités de guidage (114) est formée autour d'une unité correspondante des secondes unités de décharge (113).

19. Purificateur d'air à cyclones selon l'une quelconque des revendications 16 à 18, dans lequel la plaque supérieure du premier corps principal (100') et la pluralité de corps de cyclones (110) sont formées en un seul corps intégré.

20. Purificateur d'air à cyclones selon l'une quelconque des revendications 16 à 19, dans lequel le second corps principal (121) comprend une forme de plaque élaborée par combinaison des parties de couverture et des secondes unités de décharge (113) en un seul corps intégré.

21. Purificateur d'air à cyclones selon l'une quelconque des revendications précédentes, comprenant en outre :
une entrée, et dans lequel :
le corps principal (100) a une première et une seconde unités de plaque pour former un trajet d'air (125) entre elles afin de recevoir de l'air et des particules par l'entrée et les cyclones de la pluralité de cyclones (110) ont chacun un corps de cyclone, une orifice de guidage est formé sur la seconde unité de plaque, à travers laquelle sont introduits l'air et les particules provenant du trajet d'air (125) à l'intérieur du corps de cyclone, la première unité de décharge (111c) est formée sur une première extrémité du corps de cyclone pour décharger les particules de l'intérieur du corps de cyclone vers un première partie extérieure du corps principal (100) à travers la première unité de plaque et la seconde unité de décharge (113) est formée sur une seconde extrémité du corps de cyclone pour décharger l'air provenant de l'intérieur corps de cyclone vers une seconde partie extérieure du corps principal (100) à travers la seconde unité de plaque ;
une unité collectrice est disposée pour recevoir les particules qui ont été déchargées de l'intérieur du corps de cyclone à la première partie extérieure du corps principal (100) à travers la première unité de décharge (111c) ; et
une unité de guidage de décharge (201) est disposée pour recevoir l'air qui a été déchargé de l'intérieur du corps de cyclone à la seconde partie extérieure du corps principal (100) à travers la seconde unité de décharge (113).

22. Purificateur d'air selon la revendication 21, dans lequel les cyclones de la pluralité de cyclones (110) ont des axes centraux parallèles l'un à l'autre et les centres de la première et de la seconde unités de décharge de chaque cyclone sont disposés parallèles à un axe central correspondant des axes centraux.

23. Purificateur d'air selon la revendication 21 ou la revendication 22, dans lequel la première extrémité du corps de cyclone fait saillie de la première unité de plaque vers l'unité collectrice pour former la première unité de décharge (111c).

24. Purificateur d'air selon l'une quelconque des revendications 21 à 23, dans lequel la seconde extrémité de corps de cyclone fait saillie de la seconde unité de plaque vers l'unité de guidage de décharge pour former la seconde unité de décharge (113).

25. Purificateur d'air selon l'une quelconque des revendications 21 à 24, comprenant en outre :
une unité motrice de ventilateur pour décharger l'air contenu dans l'unité de guidage de décharge à l'extérieur du purificateur d'air.

26. Purificateur d'air selon la revendication 25, dans lequel les cyclones de la pluralité de cyclones (110) sont disposés dans une première direction, et la première et la seconde unités de plaque, le corps principal (100), l'unité collectrice, l'unité de guidage de décharge et l'unité motrice de ventilateur sont disposés dans une seconde direction.

27. Purificateur d'air selon la revendication 25, dans lequel les première et seconde unités de plaque sont disposées dans la première direction pour former le trajet d'air (125).

28. Purificateur d'air selon l'une quelconque des revendications 21 à 27, dans lequel chaque cyclone comprend en outre une unité de guidage ayant une première rainure de guidage (114a) pour recevoir l'air et les particules à travers l'orifice de guidage, une seconde rainure de guidage (114b) et un conduit de guidage (114c) formé entre la première et la seconde rainures de guidage (114a, 114b) de sorte que l'air et les particules soient introduits depuis le trajet d'air (125) à l'intérieur du corps de cyclone à travers l'orifice de guidage, la première rainure de guidage (114a), le conduit de guidage (114c) et la seconde rainure de guidage (114b) dans l'ordre.

29. Purificateur d'air selon la revendication 28, dans lequel la première rainure de guidage (114a) est espacée d'un axe central du corps de cyclone d'une première distance et la seconde rainure de guidage (114b) est espacée de l'axe central du corps de cyclone d'une seconde distance plus longue que la première distance.

30. Purificateur d'air selon la revendication 28 ou la revendication 29, dans lequel la première rainure de guidage (114a), la seconde rainure de guidage (114b) et le conduit de guidage (114c) sont disposées sur une ligne excentrique d'un axe central du corps de cyclone.

31. Purificateur d'air selon l'une quelconque des revendications 21 à 30, dans lequel chaque cyclone comprend en outre une unité de guidage disposée autour de la seconde unité de décharge (113) pour introduire l'air et les particules à l'intérieur du corps de cyclone à travers l'orifice de guidage.

32. Purificateur d'air selon l'une quelconque des revendications 21 à 31, dans lequel le corps principal (100) comprend en outre une plaque latérale (124) formée avec l'entrée ayant des orifices d'entrée (124a).

33. Purificateur d'air selon l'une quelconque des revendications 21 à 32, dans lequel le purificateur comprend une forme cylindrique ayant un côté, un fond, une partie supérieure et un centre, et la plaque latérale (124), l'unité collectrice, l'unité de guidage de décharge (201) et le corps principal (100) correspondent à des parties du côté, du fond, de la partie supérieure et du centre, respectivement.

34. Purificateur d'air selon l'une quelconque des revendications 21 à 33, dans lequel les lignes centrales de la pluralité de cyclones (110) sont perpendiculaires à au moins l'une des première et seconde unités de plaque.

35. Purificateur d'air selon l'une quelconque des revendications 21 à 34, dans lequel les cyclones de la pluralité de cyclones (110) sont disposés dans une direction circonférentielle du corps principal (100).
